# EUROPÄISCHE PATENTSCHRIFT

(11) **EP 1 933 451 B1**
(45) Veröffentlichungstag und Bekanntmachung des Hinweises auf die Patenterteilung: **07.12.2011**
(21) Anmeldenummer: 07019996.3
(22) Anmeldetag: 12.10.2007
(51) Int. Cl.: B63G 8/08

(54) **Unterseeboot mit elektrischem Bordnetz**
Submarine with electrical power supply circuit
Sous-marin avec circuit d'alimentation électrique

(30) Priorität: 13.12.2006 DE 102006059199
(43) Veröffentlichungstag der Anmeldung: 18.06.2008
(73) Patentinhaber: Howaldtswerke-Deutsche Werft GmbH, 24143 Kiel (DE)
(72) Erfinder: Buder, Ingo, Dipl.-Ing., 23617 Stockelsdorf (DE); Pischke, Sabine, Dipl.-Ing., 24103 Kiel (DE)
(74) Vertreter: Hemmer, Arnd

(56) Entgegenhaltungen:
- WO-A-98/48497
- WO-A-2005/049418
- WO-A-2006/089904
- DE-U1- 9 413 638
- US-A- 3 675 037
- US-A- 5 596 492
- US-A1- 2004 051 387
- US-B1- 6 803 679

## Beschreibung

Die Erfindung betrifft ein Unterseeboot mit einem elektrischen Bordnetz.

In Unterseebooten wird das elektrische Bordnetz üblicherweise von Wechselrichtern gespeist, welche die von den Batterien oder einer Brennstoffzellenanlage abgegebene Gleichspannung in Wechselspannung (Wechselstrom oder Drehstrom) umwandeln. Aus Gründen der Ausfallsicherheit werden hier immer mehrere Strom- bzw. Wechselrichter eingesetzt. Bislang sind die Bordnetze in Unterseebooten dazu üblicherweise in zwei oder mehr Teilnetze getrennt, welche jeweils von einem Wechselrichter mit Strom versorgt werden. Üblicherweise ist ferner zusätzlich zumindest ein Reservewechselrichter vorgesehen, welcher nicht ständig in Betrieb ist und wahlweise einem der Teilnetze zugeschaltet werden kann, falls der dortige Wechselrichter ausfallen sollte. Zur weiteren Erhöhung der Ausfallsicherheit kann auch noch die Möglichkeit bestehen, die beiden Teilnetze zusammen zu schalten, so dass diese von einem gemeinsamen Wechselrichter mit Strom versorgt werden. Nachteilig ist bei dieser Konzeption, dass prinzipbedingte Umschaltzeiten gegeben sind, welche nur eine bedingte Unterbrechungsfreiheit der Stromversorgung zulassen, was dazu führen kann, dass beim Umschalten Datenverluste, Relaisabfälle, Geräteausfälle und Ähnliches auftreten können.

DE 94 13 638 U1 betrifft ein Unterseeboot mit einem elektrischen Bordnetz, bei welchem zwei Wechselrichter ein gemeinsames Bordnetz speisen. Problematisch bei dieser Anordnung ist, die Wechselrichter so zu synchronisieren, dass sie zusammen oder einzeln eine unterbrechungsfreie Stromversorgung sicherstellen können.

WO 98/48497 offenbart ein elektrisches Bordnetz für Schiffe mit einem Schutzrechner zum schnellen Abschalten kurzschlussbetroffener Netzbereiche. Hierzu werden über Stromsensoren die in einzelnen Netzbereichen fließenden Ströme nach Betrag und Phase erfasst und addiert. Am Betrag der addierten Stromvektoren kann ein Kurzschlussfall erkannt werden.

Es ist Aufgabe der Erfindung ein Unterseeboot mit einem elektrischen Bordnetz zu schaffen, welches eine nahezu unterbrechungsfreie Stromversorgung ermöglicht und Geräteausfälle weitgehend vermeiden kann.

Diese Aufgabe wird durch ein Unterseeboot mit den im Anspruch 1 angegebenen Merkmalen gelöst. Bevorzugte Ausführungsformen ergeben sich aus den Unteransprüchen.

Erfindungsgemäß weist das Unterseeboot ein elektrisches Bordnetz mit zumindest zwei Stromrichtergeräten bzw. Wechselrichtern auf, welche die beispielsweise von einer Batterie bereitgestellte Gleichspannung in Wechselspannung für das Bordnetz umwandeln. Dabei ist es vorgesehen, dass die zumindest zwei Wechselrichter gleichzeitig eine gemeinsame Sammelschiene speisen. Das heißt, die bislang übliche Trennung des Bordnetzes in mehrere Teilnetze mit getrennten Sammelschienen, welche jeweils von nur einem Wechselrichter gespeist werden, wird hier aufgegeben.

Zum gleichzeitigen Betrieb zweier Wechselrichter an einem Netz ist die Synchronisation der Wechselrichter erforderlich. Um eine große Ausfallsicherheit zu erreichen, ist erfindungsgemäß eine Synchronisation vorgesehen, welche ohne direkte Kommunikation zwischen den Wechselrichtern oder eine übergeordnete zentrale Steuerung auskommt.

Dies wird dadurch erreicht, dass jeder Wechselrichter eine unabhängige Regeleinrichtung aufweist, welche dafür Sorge trägt, dass der zugehörige Wechselrichter auf das Netz synchronisiert wird. Dazu ist die Regeleinrichtung jedes Wechselrichters so ausgebildet, dass sie aktuelle elektrische Kenngrößen an der Sammelschiene erfassen kann und auf deren Grundlage dann den zugehörigen Wechselrichter und insbesondere dessen Ausgangsspannung und Frequenz so einstellen kann, dass der Wechselrichter synchron mit den übrigen Wechselrichtern an derselben Sammelschiene das Netz speist. Das heißt, jeder Wechselrichter führt auf Grund seiner unabhängigen Regeleinrichtung selbsttätig eine Anpassung seiner Ausgangsspannung und Frequenz in Abhängigkeit der von der Regeleinrichtung erfassten Kenngrößen aus. Dies hat den Vorteil, dass die einzelnen Wechselrichter gleichzeitig ein gemeinsames Bordnetz, d. h. eine gemeinsame Sammelschiene speisen können, und gleichzeitig eine Unabhängigkeit der Wechselrichter gegeben ist, so dass, wenn ein Wechselrichter ausfällt, der weitere Betrieb des oder der weiteren Wechselrichter gesichert ist, so dass insgesamt eine hohe Ausfallsicherheit erreicht wird.

Es ist auch möglich, Reservewechselrichter vorzusehen, welche laufend die Kenngrößen des Bordnetzes erfassen und sich laufend auf das Bordnetz synchronisieren, um dann im Falle eines Ausfalls eines anderen Wechselrichters dessen Funktion weitgehend unterbrechungsfrei übernehmen zu können. Da die einzelnen Wechselrichter unabhängig, d. h. ohne direkte Verbindung, direkte Kommunikation oder übergeordnete Steuerung arbeiten, gibt es erfindungsgemäß keine zusätzlichen verbindenden oder übergeordnete Bauteile zum gemeinsamen Betrieb der Wechselrichter, welche bei Ausfall zu einem Totalausfall der gesamten Anlage führen könnten. Ferner sind alle Wechselrichter und deren Regeleinrichtungen vorzugsweise identisch ausgebildet und gleichberechtigt in Betrieb. So kann im Unterschied zu einer Master/Slave-Regelung der Ausfall eines Wechselrichters nicht zum Totalausfall führen.

Vorzugsweise weist jede Regeleinrichtung ein Erfassungsmodul zum Erfassen der elektrischen Kenngrößen an der Sammelschiene auf. Dies sind insbesondere Netzspannungen und Netzströme an der Sammelschiene. Dabei können Gesamtspannungen oder Gesamtströme oder Einzelspannungen und Einzelströme für jede Phase erfasst werden.

Ferner weist vorzugsweise jede Regeleinrichtung ein Berechnungsmodul zum Berechnen abgeleiteter Kenngrößen, insbesondere der Wirk- und Blindleistung sowie der Frequenz und der Ausgangsklemmenspannung, auf Grundlage der erfassten elektrischen Kenngrößen auf. Diese abgeleiteten Kenngrößen können dann der weiteren Regelung zugrunde gelegt werden.

Jede Regeleinrichtung weist ein Regelmodul auf, welches zur Regelung der Ausgangsspannung des zugehörigen Wechselrichters auf Grundlage der Kenngrößen und/oder der abgeleiteten Kenngrößen ausgebildet ist. Dies ermöglicht es der Regeleinrichtung, den zugehörigen Wechselrichter allein auf Grundlage der von diesem Wechselrichter selbst erfassten Kenngrößen bzw. der aus diesen Kenngrößen abgeleiteten Kenngrößen zu regeln, so dass sich der Wechselrichter selbsttätig auf das Bordnetz synchronisieren kann. Es sind somit keine externen und insbesondere keine übergeordneten Regeleinrichtungen erforderlich.

Das Regelmodul jeder Regeleinrichtung weist einen Primärregler auf, in welchen für den Wechselrichter statische Kennlinien hinterlegt sind, auf deren Grundlage im Regelmodul die Führungsgrößen für den Primärregler ermittelt werden.

Die statischen Kennlinien können insbesondere ein Spannungs-Blindleistungsdiagramm und/oder ein Frequenz-Wirkleistungsdiagramm sein, aus denen als Führungsgrößen abhängig von den erfassten Kenngrößen und/oder den aus diesen abgeleiteten Kenngrößen die Blindleistung und/oder die Wirkleistung als Führungsgrößen für die nachfolgende Regelung ermittelt werden. Dabei dient die Wirkleistung der Frequenzregelung und die Blindleistung der Spannungsregelung. Die statischen Kennlinien sind den Wechselrichtern fest zugeordnet und sorgen dafür, dass die Wechselrichter am Netz ein bestimmtes Verhalten aufweisen, welches vorzugsweise dem eines Synchrongenerators nahe kommt. Insbesondere sind die Kennlinien so gewählt, dass sie nicht konstant sind, sondern lastabhängig abfallen, d. h. einen Abfallkoeffizienten aufweisen. Dieser lastabhängige Verlauf der Kennlinien ermöglicht es zwei oder mehreren Wechselrichtern im selben Bordnetz sich so zu finden bzw. einzuregeln, dass sie synchronisiert gemeinsam das Bordnetz speisen können.

Die Primärregler weist vorzugsweise einen Blindleistungsregler und einen Wirkleistungsregler auf, welche wie ausgeführt zur Regelung der Frequenz und der Spannung am Ausgang des Wechselrichters dienen.

Dazu weist das Regelmodul vorzugsweise einen Ausgangsspannungsregler auf, welchem die Regelgrößen des Blindleistungsreglers und des Wirkleistungsreglers, insbesondere Frequenz und Spannung, als Führungsgrößen zugeführt werden. Der Ausgangsspannungsregler stellt dann in Abhängigkeit von diesen Führungsgrößen die Ausgangsspannungen und Frequenzen vorzugsweise für alle Phasen ein.

Darüber hinaus ist jede Regeleinrichtung mit zumindest einem Sekundärregler ausgestattet, welcher auf Grundlage der Kenngrößen oder der von diesen abgeleiteten Kenngrößen eine Parallelverschiebung der im Primärregler gespeicherten statischen Kennlinie bewirken bzw. vornehmen kann, um vorgegebene Sollwerte insbesondere von Frequenz und Spannung bei gegebener Leistung zu erreichen. Auf Grund des oben beschriebenen lastabhängigen Verlaufes der Kennlinie kommt es zu Regelabweichungen. Um die hohen Anforderungen an die Netzqualität von Unterseebooten erreichen zu können, sollen diese Regelabweichungen aufgrund des abfallenden Verlaufes der statischen Kennlinien vermieden bzw. minimiert werden. Dies kann durch die Sekundärregler geschehen, welche dafür sorgen, dass die Kennlinien so verschoben werden, dass Sollspannung und Sollfrequenz bei der aktuell auftretenden Leistung eingehalten werden.

Bei der Verwendung von zwei oder mehr Wechselrichtern mit der zuvor beschriebenen Regeleinrichtung kann das Problem auftreten, dass es aufgrund der unabhängigen Regelung zu einer unsymmetrischen Lastverteilung zwischen den einzelnen Wechselrichtern kommt, was nicht gewünscht ist. Um dies zu vermeiden, sind die Sekundärregler mit einer Symmetrierungseinrichtung zur Symmetrierung der Lastverteilung ausgestattet. Dabei sind die Symmetrierungseinrichtungen ebenfalls so ausgebildet, dass sie für jeden Wechselrichter unabhängig von den Symmetrierungseinrichtungen der anderen Wechselrichter arbeiten, d. h. es findet keine direkte Kommunikation oder übergeordnete Steuerung bzw. Regelung der Wechselrichter zur Symmetrierung der Lastverteilung statt.

Die Symmetrierungseinrichtung ist vorzugsweise derart ausgestaltet, dass sie das Verhältnis der Ausgangsleistung des zugehörigen Wechselrichters zu der Gesamtleistung an der Sammelschiene erfasst und Änderungen dieses Verhältnisses registriert. Abhängig von einer Änderung dieses Verhältnisses kann die Symmetrierungseinrichtung ebenfalls eine Parallelverschiebung der im Primärregler gespeicherten statischen Kennlinie bewirken, um die Sollwerte, insbesondere von Frequenz und Spannung bei gegebener Leistung zu erreichen. Vorzugsweise bewirken die Sekundärregler der einzelnen Wechselrichter durch ihre unabhängige Regelung ein Pendeln zwischen Symmetrierung und Wiederherstellung der Sollfrequenz und Sollspannung im Bordnetz, so dass insgesamt durch dieses Auspendeln eine konstante Frequenz bei symmetrischer Lastverteilung im Bordnetz erreicht werden kann. Dies erfolgt in der Weise, dass bei einer Laständerung zunächst ein beliebiger Wechselrichter eine Anpassung seiner Leistung vornimmt, um die Ausgangsleistung der veränderten Last anzupassen. Dadurch wird insbesondere die Sollfrequenz im Bordnetz wiederhergestellt, was dann wiederum von einem anderen Wechselrichter als Laständerung registriert wird. Da jedoch die Sollfrequenz bereits erreicht ist, wird in diesem Wechselrichter dann die Symmetrierungseinrichtung aktiv und sorgt für eine Leistungsanpassung des zweiten Wechselrichters. Diese wird wiederum von dem ersten Wechselrichter als Laständerung wahrgenommen, so dass dieser dann wiederum eine Leistungsanpassung vornimmt, so dass sich beide Wechselrichter dann auf eine symmetrische Lastverteilung bei der Sollfrequenz einpendeln können. Mit mehr als zwei Wechselrichtern funktioniert dieses Verfahren entsprechend. Ferner stellen sich auch bei Ausfall eines Wechselrichters die verbleibenden Wechselrichter an der Sammelschiene auf eine konstante Frequenz und gleichmäßige Lastverteilung ein.

Jede Regeleinrichtung weist vorzugsweise zwei Sekundärregler auf, von welchen jeweils einer zur Frequenz- und der andere zur Spannungsregelung dient. Das heißt, jeder der Sekundärregler bewirkt eine Parallelverschiebung einer der statischen Kennlinien im Primärregler, d. h. der Kennlinie im Spannungs-Blindleistungsdiagramm und der Kennlinie im Frequenz-Wirkleistungsdiagramm, welche den Verlauf der Blindleistung über der Spannung bzw. der Wirkleistung über der Frequenz angeben.

Vorzugsweise ist jede Regelungseinrichtung und insbesondere jeder Sekundärregler und weiter bevorzugt dessen Symmetrierungseinrichtung mit einer Überlastsicherung ausgestattet, welche dafür Sorge tragen, dass eine längere Überlastung der Wechselrichter vermieden wird und gegebenenfalls der Wechselrichter vorzeitig abschaltet.

Die weitgehend unterbrechungsfreie Stromversorgung wird ferner durch ein verbessertes Schutzkonzept ermöglicht. Das Schutzkonzept soll auf jeden Fall sicherstellen, das es nicht zu einem Totalausfall des gesamten Bordnetzes kommt. Dies ist insbesondere dann bevorzugt, wenn ein gemeinsames Bordnetz von mehreren Wechselrichtern gespeist wird, wie es vorangehend beschrieben wurde, d. h. nicht mehrere getrennte Sammelschienen wie im Stand der Technik vorgesehen sind.

Vorzugsweise ist das elektrische Bordnetz in mehrere Teilnetze aufgeteilt, welche im Normalbetrieb zusammengeschaltet und gemeinsam betrieben werden. Dabei können sie insbesondere, wie vorangehend beschrieben, gemeinsam von mehreren Wechselrichtern gespeist werden. Vorzugsweise sind in dem Bordnetz bzw. einer Sammelschiene Leistungsschalter derart angeordnet, dass durch Öffnen der Leistungsschalter Teilnetze von dem gemeinsamen Bordnetz abgetrennt werden können oder das Bordnetz gegebenenfalls in mehrere Teilnetze geteilt werden kann, um im Fehlerfall in einem Teilbereich des Bordnetzes den Gesamtausfall des Bordnetzes verhindern zu können.

Die einzelnen Teilnetze sind mit Sensoren zum laufenden Erfassen von aktuellen Kenndaten der einzelnen Teilnetze ausgestattet. Ferner sind die Sensoren und die Leistungsschalter mit einer gemeinsamen Steuereinrichtung derart verbunden, dass Sensoren und Leistungsschalter mit der Steuereinrichtung kommunizieren können und insbesondere die gemeinsame Steuereinrichtung die Leistungsschalter schalten kann. Dabei ist die Steuereinrichtung derart ausgebildet, dass die Leistungsschalter von der Steuereinrichtung in Abhängigkeit der aktuell erfassten Kenndaten selektiv schaltbar sind. Dies ermöglicht es der Steuereinrichtung in dem Fall, dass von den Sensoren Kenndaten erfasst werden, welche auf einen Kurzschluss in einem Teilbereich des Bordnetzes schließen lassen, durch Öffnen des oder der zugehörigen Leistungsschalter dieses Teilnetz, in welchem der Kurzschluss aufgetreten ist, vom Bordnetz zu trennen. Um die Steuereinrichtung und die Kommunikation zwischen Leistungsschaltern und Sensoren möglichst ausfallsicher zu machen, kann diese redundant ausgebildet sein, so dass beispielsweise beim Ausfall der Steuereinrichtung eine zweite Steuereinrichtung sofort deren Funktion übernehmen kann.

Vorzugsweise umfassen die Kenndaten der einzelnen Teilnetze, welche von den Sensoren erfasst werden, die elektrischen Ströme in den einzelnen Teilnetzen. So ist es der Steuereinrichtung möglich, zu erkennen, wenn der Strom in einem Teilnetz einen Wert erreicht, welcher auf einen Kuruchluss schließen lässt.

Erfindungsgemäß ist es besonders bevorzugt, dass in der Steuereinrichtung zumindest eine Tabelle hinterlegt ist, in welcher jeweils zu dem Kurzschlussfall in einem der Teilnetze die jeweils in den einzelnen Teilnetzen und/oder an den zugehörigen Sensoren auftretenden Kurzschlussströme oder deren Verhältnis zueinander hinterlegt ist. Diese Tabelle nutzt die Erkenntnis, das ein Kurzschluss in einem Teilbereich des Bordnetzes bzw. in einem Teilnetz üblicherweise nicht nur dort zu einer Veränderung des auftretenden Stroms sondern auch in den anderen Teilbereichen des Bordnetzes und an den dort angeordneten Sensoren zu einer Veränderung des Stromes kommt, was allein aus der Geometrie des Bordnetzes begründet ist. So werden an den einzelnen Messpunkten bzw. Sensoren insbesondere unterschiedliche Vielfache des auftretenden Kurzschlussstromes und Vorzeichen des Kurzschlussstromes auftreten, was von den dort angeordneten Sensoren erfasst werden kann. In der Tabelle ist vorzugsweise für jeden Kurzschlussfall der auftretende Zustand der Ströme an allen Sensoren hinterlegt, so dass aus diesem hinterlegten Bild der auftretenden Kurzschlussströme an den einzelnen Sensoren umgekehrt anhand der Tabelle geschlossen werden kann, in welchem Teilbereich des Bordnetzes der Kurzschluss aufgetreten ist. Vorzugsweise ist es dabei so, dass jeder Kurzschlussfall ein eindeutig zuortbares Bild von Kurzschlussströmen an allen vorhandenen Sensoren aufweist, d. h. anhand dieses Bildes der auftretenden Ströme kann ein bestimmter Kurzschlussfall eindeutig identifiziert werden.

Die Steuereinrichtung ist vorzugsweise entsprechend derart ausgebildet, dass die Lokalisierung des Kurzschlussfalles, d. h. die Erkennung des Teilnetzes, in welchem der Kurzschluss aufgetreten ist, durch Zuordnung der auftretenden Kombination bzw. des Bildes von Kunschlussströmen anhand der abgelegten Tabelle erfolgt und von der Steuereinrichtung daraufhin der entsprechenden Leistungsschalter, welcher diesem Teilnetz zugeordnet ist, zum Abtrennen des Teilnetzes, in welchem der Kurzschlussfall lokalisiert wurde, schaltbar ist. Das heißt, die Steuereinrichtung kann, da im Kurzschlussfall an allen Sensoren die Beträge und Vorzeichen der dort auftretenden Kurzschlussströme erfasst werden, durch Zuordnung anhand der Tabelle feststellen, wo im Teilnetz der Kurzschluss aufgetreten ist und dieses Teilnetz dann durch Öffnen des zugehörigen Leistungsschalters abschalten.

Darüber hinaus ist es bevorzugt, das in der Steuereinrichtung eine oder mehrere Tabelle(n) hinterlegt ist/sind, in welchen jeweils für den Kurzschlussfall in einem der Teilnetze die jeweils in den einzelnen Teilnetzen und/oder an den zugehörigen Sensoren auftretenden Kurzschlussströme oder deren Verhältnis zueinander hinterlegt ist, für den Fall, dass ein oder mehrere bestimmte Leistungsschalter geöffnet sind. Diese zusätzlichen Tabellen berücksichtigen Kurzschlussfälle, welche auftreten, wenn bereits Teilnetze durch Öffnen der zugehörigen Leistungsschalter vom Bordnetz getrennt sind. In diesem Fall können sich die an den einzelnen Sensoren auftretenden Kurzschlussströme dem Betrag und Vorzeichen gegenüber dem Fall, dass alle Leistungsschalter geschlossen und alle Teilnetze am Bordnetz sind, ändern. Da der Steuereinrichtung bekannt ist, welche Leistungsschalter geschaltet bzw. geöffnet sind, kann die Steuereinrichtung beim Auftreten eines weiteren Kurzschlussfalls nach Öffnen eines bestimmten Leistungsschalters dann anhand der zusätzlichen Tabelle, welche das Bild der Kurzschlussströme bei geöffneten Zustand eines bestimmten Leistungsschalters oder mehrerer bestimmter Leistungsschalter wiedergibt, den Ort bzw. das Teilnetz dieses erneuten Kurzschlussfalles lokalisieren. Anschließend kann die Steuereinrichtung dann den Leistungsschalter dieses Teilnetzes, in dem der Kurzschluss aufgetreten ist, öffnen, um dieses Teilnetz vom Bordnetz zu trennen.

Das heißt, vorzugsweise ist die Steuereinrichtung derart ausgebildet, das nach dem Schalten eines Leistungsschalters zum Trennen eines Teilnetzes für nachfolgende Lokalisierung von Kurzschlussfällen eine geänderte Tabelle verwendet wird, welche den geöffneten Zustand des Leistungsschalters berücksichtigt.

Besonders bevorzugt sind die Sensoren in die Leistungsschalter integriert. Das heißt, es handelt sich um intelligente Leistungsschalter, welche gleichzeitig in der Lage sind, Zustandgrößen, insbesondere den Strom in der Leitung, welche sie schalten, erfassen zu können und an eine zentrale Steuereinrichtung übermitteln zu können. Hierzu sind die Leistungsschalter mit einer entsprechenden Kommunikationsschnittstelle ausgestattet, welche zum einen von dem Sensor erfasste Kenndaten an die Steuereinrichtung überträgt und zum anderen von der Steuereinrichtung Schaltbefehle empfangen kann, welche ein Öffnen und/oder Schließen des Leistungsschalters ermöglichen.

Das Schutzkonzept ermöglicht es, Fehler im Bordnetz genau zu lokalisieren und die Teilnetze, in welchem Fehler aufgetreten sind schnell vom Bordnetz zu trennen, ohne dass die Stromversorgung im Übrigen Bordnetz unterbrochen wird. Durch die zentrale Steuerung der Leistungsschalter in der beschriebenen Weise wird dabei Selektivität der Schalter erreicht. Hierdurch wird eine quasi unterbrechungsfreie Stromversorgung gewährleistet. Die Unterbrechung der Stromversorgung ist idealerweise auf das physikalisch bedingte Minimum, d. h. auf den Moment des Kurzschlusses begrenzt.

Nachfolgend wird die Erfindung beispielhaft anhand der beigefügten Figuren beschrieben. In diesen zeigt:
- Fig. 1: ein Prinzipschaltbild einer gemeinsamen Sammelschiene mit drei Wechselrichtern
- Fig. 2: die prinzipielle Regelstruktur einer Regeleinrichtung eines Wechselrichters,
- Fig. 3: eine Frequenz-Wirkleistung-Statik,
- Fig. 4: die Verschiebung der Frequenz-Wirkleistung-Statik zur Wiederherstellung der Frequenz,
- Fig. 5: die prinzipielle Regelstruktur für die Symmetrierung,
- Fig. 6: in einer Tabelle die Kombination der auftretenden Kurzschlussströme beim Betrieb des Bordnetzes gemäß Fig. 1,
- Fig. 7: in einer Tabelle die Kombination der auftretenden Kurzschlussströme beim Ausfall einzelner Stromrichter,
- Fig. 8: in einer Tabelle die auftretenden Kurzschlussströme beim Ausfall einzelner Schalter,
- Fig. 9: in einer Tabelle die Kombination von auftretenden Strömen beim Ausfall einzelner Schalter nach dem Auslösen der anderen am Schaltvorgang beteiligten Schalter und
- Fig. 10: einen Programmflussplan für das Netzabsicherungssystem.

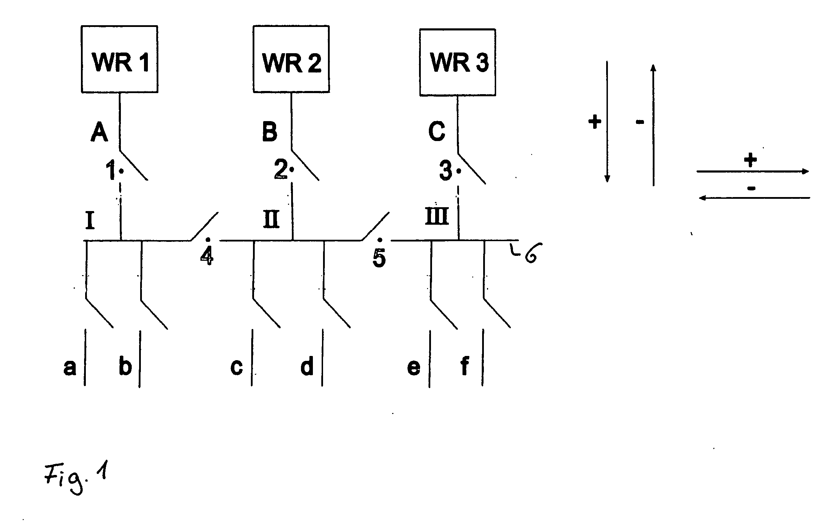

Fig. 1 zeigt schematisch den Parallelbetrieb von drei Stromrichtern an einem gemeinsamen Bordnetz. Die Strom- bzw. Wechselrichter WR₁, WR₂ und WR₃ wandeln die von den Batterien bzw. einer Brennstoffzellenanlage bereitgestellte Gleichspannung in Wechselspannung bzw. Drehstrom um. Der Übersichtlichkeit halber ist hier die einphasige Ausführung dargestellt. Im normalen Betrieb sind von den Schaltern 1, 2, 3, 4 und 5 die Schalter 4 und 5 geschlossen, so dass eine gemeinsame Sammelschiene 6 gebildet wird. Ferner ist bevorzugt daran gedacht, die in Fig. 1 gezeigte Anlage so zu betreiben, dass im Normalbetrieb die Schalter 1 und 3 geschlossen sind, so dass die Wechselrichter WR₁ und WR₃ gemeinsam das Bordnetz speisen. Der Schalter 2 bleibt im Normalbetrieb geöffnet, so dass der Wechselrichter WR₂ nicht mit dem Netz verbunden ist und als Reservewechselrichter zur Verfügung steht, welcher bei Ausfall eines der anderen Wechselrichter WR₁ oder WR₃ zugeschaltet wird. Mit a bis f sind die Anschlüsse einzelner Verbraucher an die Sammelschiene 6 gekennzeichnet. Durch die Schalter 4 und 5 wird die Sammelschiene 6 in drei Abschnitte I, II und III geteilt bzw. ist durch Öffnen der Schalter teilbar. An den Schaltern 1 bis 5 sind ferner Messpunkte zum Erfassen des Stromes nach Betrag und Richtung angeordnet. Hierzu sind Leistungsschalter 1,2, 3, 4 und 5 vorgesehen, welche gleichzeitig diese Werte erfassen und an eine zentrale Steuereinrichtung melden können, welche auch für das Öffnen und Schließen der Schalter 1 bis 5 verantwortlich ist. Die Schalter 1 bis 5 sind hierzu mit entsprechenden Kommunikationsmodulen ausgerüstet.

Der parallele Betrieb zweier Wechselrichter, beispielsweise der Wechselrichter WR₁ und WR₃ an einer gemeinsamen Sammelschiene 6 erfordert eine Synchronisierung der Ausgangsspannung und Frequenz. Erfindungsgemäß erfolgt diese durch unabhängige Regeleinrichtungen, welche in die Wechselrichter integriert sind, ohne dass eine übergeordnete Steuerung oder direkte Kommunikation zwischen den Wechselrichtern erforderlich ist. Darüber hinaus sind die Wechselrichter im Betrieb gleichberechtigt, d. h. es bestehen keine Abhängigkeiten nach dem Master/Slave-Prinzip.

Die Wechselrichter WR₁, WR₂ und WR₃ weisen Regeleinrichtungen auf, welche das Bordnetz, d. h. insbesondere Strom und Spannung an der Sammelschiene 6 selbsttätig erfassen und den zugehörigen Wechselrichter WR₁, WR₂ oder WR₃ so regeln, das er sich selbsttätig auf das Netz synchronisiert.

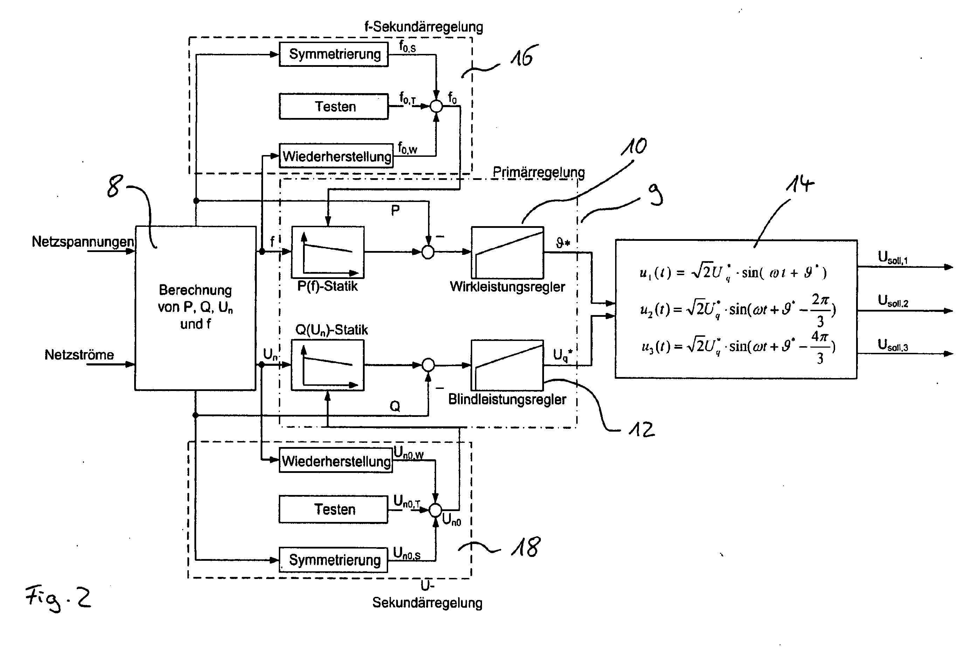

Fig. 2 zeigt schematisch wie diese Regelung prinzipiell funktioniert. Wie erläutert werden Netzspannungen und Netzströme von den Wechselrichtern erfasst und in einem Berechnungsmodul 8 der Regeleinrichtung werden auf Grundlage dieser Kenngrößen abgeleitete Kenngrößen, nämlich die Wirk- und Blindleistung sowie Frequenz und Ausgangsklemmenspannung berechnet, welche als Führungsgrößen für die nachfolgende Regelung dienen. So dient die errechnete Frequenz der Regelung der Frequenz über den Wirkleistungsregler 10 und die berechnete Spannung der Regelung der Spannung über den Blindleistungsregler 12. Wirkleistungsregler 6 und Blindleistungsregler 8 sind Teil eines Primärreglers 9. Diese Primärregelung berücksichtigt statische Kennlinien, welche dem Wechselrichter fest vorgegeben sind und in einem Speicher der Regeleinrichtung abgespeichert sind. Dies sind eine Spannungs-Blindleistungskennlinie (Q(Uₙ)-Statik welche zur Spannungsregelung verwendet wird, sowie eine Frequenz-Wirkleistungskennlinie (P(f)-Statik), welche zur Frequenzregelung verwendet wird.

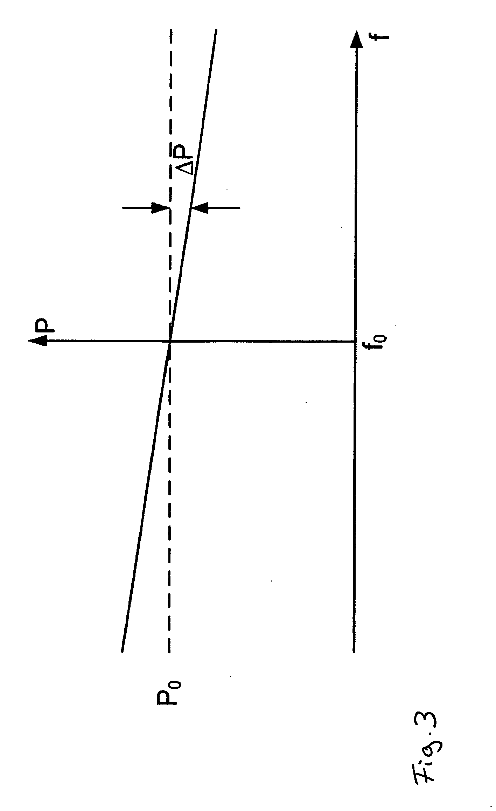

In Fig. 3 ist beispielhaft der Verlauf der Frequenz-Wirkleistung-Statik dargestellt. Der Verlauf der Spannungs-Blindleistungs-Statik ist entsprechend. Wichtig ist, dass es sich hierbei um lastabhängige Kennlinien handelt. Das heißt, die Kennlinie ist keine Konstante, d. h. Waagerechte im Diagramm, vielmehr findet ein Abfall von Spannung bzw. Frequenz mit zunehmender Last statt. Diese Ausgestaltung der Kennlinien mit Abfallkoeffizienten ermöglicht es erst, dass sich zwei Wechselrichter mit identischen Regeleinrichtungen im Netz so finden, dass sie synchronisiert das Netz gemeinsam speisen können. Die festgelegten Statiken zwingen dem Stromregler das Verhalten eines geregelten Synchrongenerators auf.

Nachfolgend wird beispielhaft die Regelung erläutert, wobei zur Vereinfachung nur eine Phase betrachtet wird.

Im Ausgangsfall besitzt die Spannung im Netz die Frequenz f₁ und die Amplitude U₁. Die zugehörigen Leistungen im Netz sind P₁ und Q₁ (Wirk- und Blindleistung) Beim Zuschalten einer weiteren Last ändern sich die Ströme und die Leistungen erhöhen sich auf P₂ und Q₂, die Spannungsamplitude bleibt jedoch zunächst bei U₁ und die Frequenz bleibt bei f₁, da der Strom- bzw. Wechselrichter selber keine Änderungen dieser Größen bewirken kann. Er liefert eine konstante Ausgangsspannung mit konstanter Frequenz. Diese Änderung wird erst durch die vorgegebenen Statiken, die P(f)-Statik und die Q(Uₙ)-Statik möglich. Durch die Statiken werden als Führungsgrößen für den Wirkleistungsregler 10 und den Blindleistungsregler 12 weiterhin P₁ und Q₁ ermittelt. Die Regelgrößen haben sich auf P₂ und Q₂ (gemessen im Netz, d. h. an der Sammelschiene 6) verändert. Dadurch entsteht eine Regeldifferenz, die nun von dem Regler ausgeregelt wird. Die Leistungsregler, d. h. der Wirkleistungsregler 10 und der Blindleistungsregler 12, generieren neue Werte für U_{q}* und θ* (ϑ*). Diese bilden die Führungsgrößen für die Stromrichterausgangsspannungsregler 14, welche auf deren Grundlagen die neuen Ausgangsspannungen des Wechselrichters U_{Soll, 1}, U_{Soll, 2} und U-_{Soll}, ₃, im Falle eines Drehstromnetzes, einstellen. Aus der zeitlichen Veränderung des Winkels θ* folgt die Frequenzänderung. Die Spannung im Netz ändert sich, die Amplitude wird zu U₂, die Frequenz zu f₂.

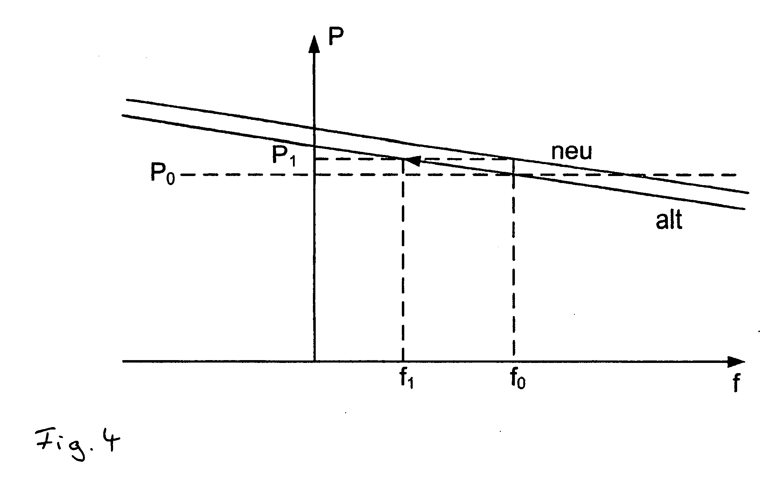

Aufgrund des abfallenden Verlaufes der Statiken führt dies dazu, dass diese Frequenz und Amplitude nicht mehr den gewünschten starren-Sollwerten des Netzes entsprechen, vielmehr kommt es zu Abweichungen aufgrund der Statiken. Um diese zu kompensieren und eine konstant hohe Netzqualität bereitstellen zu können, ist neben der Primärregelung zusätzlich eine Sekundärregelung vorgesehen. Wie in Fig. 2 dargestellt sind zwei Sekundärregelungen, d. h. zwei Sekundärregler 16, 18 zur Frequenzsekundärregelung (f-Sekundärregelung) und Spannungssekundärregelung (U-Sekundärregelung) vorgesehen. Diese Sekundärregelungen bewirken eine Verschiebung der im Primärregler abgelegten Statiken, d. h. der P(f)-Statik und der Q(Uₙ)-Statik. Dies ist beispielhaft anhand der P(f)-Statik in Figur 4 gezeigt. Die Verschiebung der Q(Uₙ)-Statik erfolgt entsprechend. Diese Verschiebung bewirkt, dass die Kennlinien wieder auf die Sollwerte verschoben werden, so dass bei gegebener Last im Netz die vorgegebene Frequenz und die vorgegebene Spannung eingehalten werden können. Diese Wiederherstellung erfolgt in den Sekundärregler 16 und 18 durch ein Wiederherstellungsmodul.

Die von einem Sekundärregler eines Wechselrichters vorgenommene Verschiebung der Statik wird von den anderen am Netz angeschlossenen Wechselrichtern als Leistungssprung interpretiert, was wiederum zu einer unsymmetrischen Lastverschiebung führt. Aus diesem Grund weist die Sekundärregelung in den Sekundärreglern 16 und 18 zusätzlich jeweils ein Symmetrierungsmodul auf, welches dazu dient, im Netz eine symmetrische Lastverteilung zwischen den beteiligten Wechselrichtern zu erreichen. Zu beachten ist dabei, dass auch diese Symmetrierung ohne direkte Kommunikation oder übergeordnete Steuerung zwischen den Wechselrichtern erfolgt.

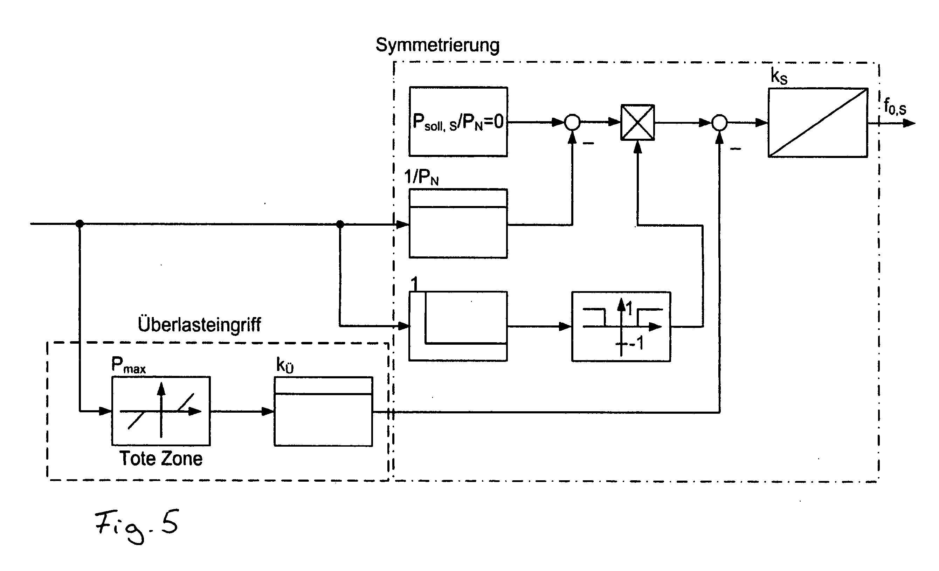

Um die Symmetrierung auch in Zeitabschnitten, in denen keine Lastwechsel im Netz auftreten, in Gang setzen zu können ist, in den Sekundärreglern 16 und 18 jeweils ein "Testen"-Modul vorgesehen. Dieses bewirkt eine Verschiebung der P(f)-Statik um f_{0,T} bzw. der Q(Uₙ)-Statik um U_{n0,T}. Die Wiederherstellung der Frequenz oder Spannung wird durch das Wiederherstellungsmodul eingeleitet. Die Symmetrierung erfolgt dann durch das Symmetrierungsmodul, dessen prinzipielle Regelstruktur in Fig. 5 dargestellt ist.

Wenn zwei identische Wechselrichter, beispielsweise die Wechselrichter WR₁ und WR₃ auf einer gemeinsamen Sammelschiene 6 betrieben werden ist am Anfang die Anfangsfrequenz beispielsweise f₀ und die Wirkleistung P₀. Wenn nun die Last auf P₁ vergrößert wird, kommt es dabei zu einer Absenkung der Frequenz auf f₁. Wenn nun beispielsweise die Regeleinrichtung des ersten Wechselrichters WR₁ als erstes reagiert und die Frequenz f₀ wieder herstellt, wird der zweite Wechselrichter WR₃ diese Frequenzänderung als Laständerung interpretieren und entsprechend seine Leistungsabgabe senken. Dies führt dann zu der bereits oben erwähnten unsymmetrischen Lastverteilung. Zu deren Ausgleich wird bei der Symmetrierung der Wert P_{sollS} zu 0 gewählt. Durch die Lasterhöhung im Netz wird das Verhältnis der Gesamtlast zu der einzelnen Last des Wechselrichters P/P_{N} größer und umgekehrt der Wert f_{0S} kleiner (betragsmäßig größer, aber negativer Bereich). Die Frequenz, die von WR₁ schon geregelt wurde, führt dazu, dass der Wert f₀,_{w} = 0 ist, d. h. fo liegt im Netz bereits an. Trotzdem will WR₃ aufgrund der Symmetrierung nun seine Frequenz senken, um seine Leistung wieder zu erhöhen. Die gesenkte Frequenz führt dann bei WR₁ zu einer Anhebung der Leistung in nur kleinerem Maße als bei WR₂. Der Ablauf hat somit eine erneute Wiederherstellung der Frequenz zur Folge. Es kommt zu einem Pendeln zwischen Symmetrierung und Wiederherstellung, wobei beides solange pendelt, bis nahezu die Sollfrequenz und Sollleistung bei symmetrischer Lastverteilung eingestellt sind. Im Parallelbetrieb zweier Wechselrichter WR₁ und WR₃ führt somit immer eine Änderung des einen Stromrichters auch zu einer Änderung des anderen Stromrichters, wobei dies lediglich durch direkte Überwachung des Netzes durch die Regeleinrichtung jedes Wechselrichters selber erfolgt.

So werden die einzelnen Wechselrichter auch den Ausfall eines anderen Wechselrichters anhand der Veränderungen der Kenngrößen im Netz, d. h. an der Sammelschiene 6 feststellen und ihre Ausgangsspannung nach Amplitude und Frequenz entsprechend regeln, um Sollspannung und Sollfrequenz im Netz aufrechtzuerhalten.

Nachfolgend wird ferner anhand der Schaltung in Fig. 1 ein Schutzkonzept für die Netzabsicherung gemäß der Erfindung erläutert, welches eine nahezu unterbrechungsfreie Stromversorgung, insbesondere bei dem geschilderten Parallelbetrieb zweier oder mehrerer Wechselrichter an einer Sammelschiene sicherstellen kann. Dazu sind die Leistungsschalter 1 bis 5 mit Messaufnehmern bzw. Sensoren ausgerüstet, welche den Strom an der Schaltstelle erfassen und an eine nicht gezeigte zentrale Steuereinrichtung übermitteln. Diese führt eine Auswertung durch, welche Fehler, d. h. Kurzschlüsse im Netz erkennen und lokalisieren kann und daraufhin gezielt einzelne der Schalter 1 bis 5 öffnen kann, um kurzschlussbehaftete Netzteile bzw. Teilnetze abtrennen zu können. Durch dieses Konzept wird die Selektivität der Schutzorgane im Gesamtnetz sichergestellt.

Dem Schutzkonzept liegt die Erkenntnis zugrunde, dass ein Fehler im Netz, d. h. ein Kurzschluss durch eine bestimmte Kombination der Kurzschlussströme an den einzelnen Messstellen erkannt und lokalisiert werden kann. Da die Messstellen hier in die Leistungsschalter integriert sind, liegen sie an den Stellen der Leitungsschalter. Es könnten jedoch auch separate Sensoren bzw. Messwertaufnehmer an anderen Stellen vorgesehen werden. Die zentrale Steuereinrichtung fragt ständig die an den Messpunkten der Schalter 1 bis 5 ermittelten Stromwerte ab und wertet diese aus. Hierzu können die Messwerte von kommunikativen Leistungsschaltern beispielsweise über ein Bussystem an die zentrale Steuereinrichtung übermittelt werden. Es sind jedoch auch andere herkömmlich verfügbare Kommunikationswege zwischen Leistungsschaltern und Steuereinrichtung verwendbar.

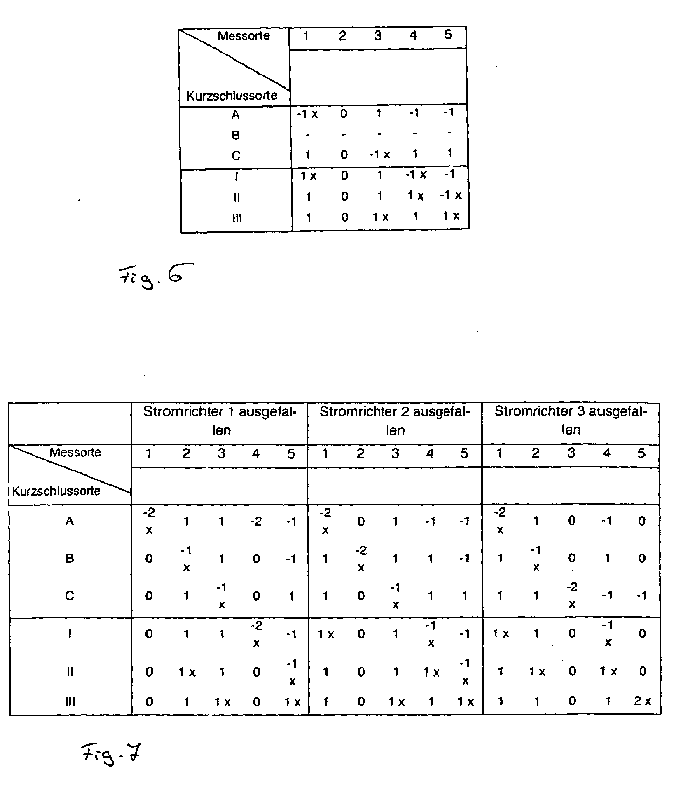

Fig. 6 zeigt die Kombinationen von auftretenden Kurzschlussströmen bei der Schaltungsanordnung gemäß Fig. 1, wobei im normalen Betrieb die Schalter 1, 3, 4 und 5 geschlossen sind, d. h. die Abschnitte I, II und III zu einer gemeinsamen Sammelschiene 6 zusammengeschaltet sind und die Wechselrichter WR₁ und WR₃ in Betrieb sind. Der Wechselrichter WR₂ wird als Reservewechselrichter vorgehalten, um beim Ausfall eines der anderen Wechselrichter dessen Funktion übernehmen können. In der Tabelle in Fig. 6 sind die Messorte an den Schaltern 1 bis 5 in den Zeilen und die Kurzschlussorte an den Stellen A, B und C, was den Wechselrichtern WR₁, WR₂ und WR₃ entspricht, sowie in den Zweigen I, II und III der Sammelschiene 6 in den Spalten aufgetragen. In der sich ergebenden Matrix sind die auftretenden Kurzschlussströme im Verhältnis zueinander mit ihren Vorzeichen eingetragen, wobei die Stromrichtungsdefinition den Pfeilen in Fig. 1 entnommen werden kann.

Da der Wechselrichter WR₂ durch Öffnen des Schalters 2 abgeschaltet ist, treten im Zweig B überhaupt keine Kurzschlussströme auf.

Es ist zu erkennen, dass je nach dem wo der Kurzschluss auftritt, im Wechselrichter WR₁, d. h. bei A im Wechselrichter WR₃, d. h. bei C oder in den Abschnitten I, II oder III der Sammelschiene 2 an den Messstellen 1 bis 5 unterschiedliche Verteilungen bzw. Kombinationen von Kurzschlussströmen auftreten. Die Kombination von Kunschlüssen in jedem Kurzschlussfall stellt ein bestimmtes Bild der Kurzschlussstromverteilung dar, welches eindeutig einem Kurzschlussfall zugeordnet ist. So kann aus den an den Messstellen 1 bis 5 gemessenen Strömen von der Steuereinrichtung eindeutig bestimmt werden, wo der Kurzschluss aufgetreten ist.

Entsprechend kann dann der passende Schalter geöffnet werden. Beispielsweise wird bei einem Kurzschluss im Wechselrichter WR₁, d. h. beim Ort A, an der Messstelle 1 ein negativer Kurzschlussstrom, an der Messstelle 2 überhaupt kein Kurzschlussstrom, an der Messstelle 3 ein positiver Kurzschlussstrom und an den Messstellen 4 und 5 jeweils der einfache negative Kurzschlussstrom bestimmt. Um diesen Kurzschlussfall zu beseitigen, muss der Schalter 1 geöffnet werden. In der Tabelle in Fig. 6 sind die Schalter, welche zum Abschalten des Netzteils mit Kurzschluss geöffnet werden müssen durch x gekennzeichnet. Im Fall, dass ein Kurzschluss in dem Sammelschienenabschnitt II auftritt, müssen z. B. die Schalter 4 und 5 geöffnet werden.

Die Tabelle wie sie in Fig. 6 dargestellt ist, wird in der zentralen Steuereinrichtung hinterlegt und diese vergleicht die an den Messstellen 1 bis 5 gemessenen Ströme mit der Tabelle. Kommt es zu einer Kombination von Strömen, welche in der Tabelle angegeben ist, lokalisiert die Steuereinrichtung auf diese Weise einen Kurzschluss an einer bestimmten Stelle und veranlasst die Auslösung der erforderlichen Schalter, um die entsprechend kurzschlussbehafteten Netzteile abzutrennen. Diese Schalter sind in Fig. 6 mit x gekennzeichnet.

Die in Fig. 6 gezeigte Tabelle betrifft den Fall, dass die Wechselrichter WR₁ und WR₃ in Betrieb sind. Entsprechend können zusätzliche Tabellen hinterlegt sein, für den Fall, dass andere Kombinationen von Wechselrichtern in Betrieb sind, wobei der Steuereinrichtung, da sie die Schalter öffnet und schließt, bekannt ist, welche Wechselrichter am Netz sind, und so auf die richtige Tabelle zugreifen kann. Ferner lassen sich Matrixen bzw. Tabellen ähnlich der in Fig. 6 auch für Stromrichterausfälle, defekte Schalter oder nicht auslösende Schalter aufstellen. Derartige Tabellen sind in den Figuren 7 bis 9 dargestellt. So ist in Fig. 7 aufgelistet, welche Kurzschlussströme an den Messstellen 1 bis 5 in dem Fall auftreten, dass einer der Stromrichter WR₁, WR₂ oder WR₃ (Stromrichter 1, Stromrichter 2 und Stromrichter 3) ausfällt. Auch hier sind zur Beseitigung des Fehlers wieder die mit x gekennzeichneten Schalter zu öffnen, abhängig davon an welchem Ort der Kurzschluss auftritt.

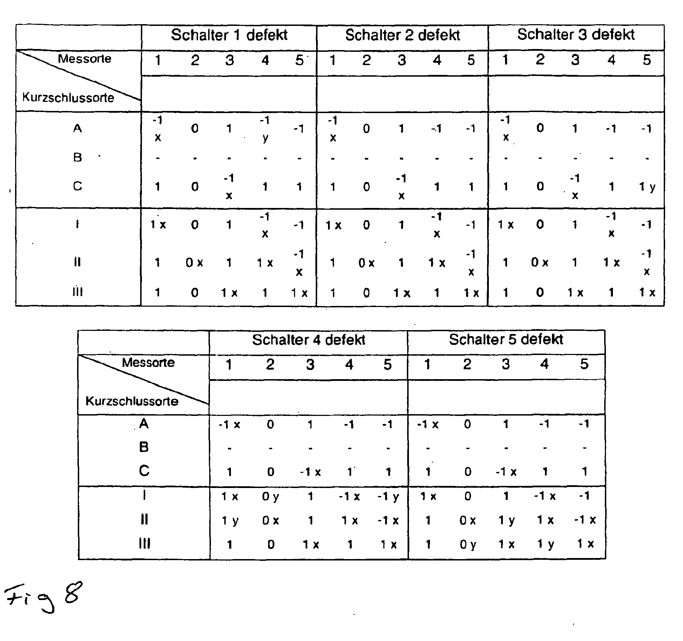

Fig. 8 zeigt eine Tabelle, welche den Fall berücksichtigt, dass einer der Schalter 1 bis 4 defekt ist, wobei in der Tabelle in Fig. 8 alle fünf Fälle, d. h. Schalter 1 defekt, Schalter 2 defekt, Schalter 3 defekt, Schalter 4 defekt oder Schalter 5 defekt, dargestellt sind. Hier wird auch wieder davon ausgegangen, dass lediglich die Wechselrichter WR₁ und WR₃ in Betrieb sind und der Wechselrichter W₂ als Reservewechselrichter durch Öffnen des Schalters 2 abgeschaltet ist. Auch in der Tabelle gemäß Fig. 8 sind diejenigen Schalter, welche für den einzelnen Kurzschlussfall zum Abtrennen des entsprechenden Teilnetzes zu öffnen sind, mit x gekennzeichnet. Zusätzlich sind diejenigen Schalter mit y gekennzeichnet, welche zu öffnen sind in dem Fall, dass einer der Schalter, welcher eigentlich auslösen müsste, defekt ist. Ein solches Problem tritt beispielsweise auf, wenn ein Kurzschluss im Stromrichter WR₃ auftritt und der Schalter 3 defekt ist. Eigentlich müsste zum Abschalten des Wechselrichters WR₃ der Schalter 3 geöffnet werden. Wie in der Tabelle in Fig. 8 in der Matrix oben rechts zu erkennen ist, wird dann alternativ der Schalter 5 geöffnet, um einen größeren Teilbereich, welcher mit dem Wechselrichter WR₃ in Verbindung steht, von der Sammelschiene 6 zu trennen. Es bleibt dann nur noch ein Teilnetz bestehen. Ein Totalausfall wird jedoch vermieden.

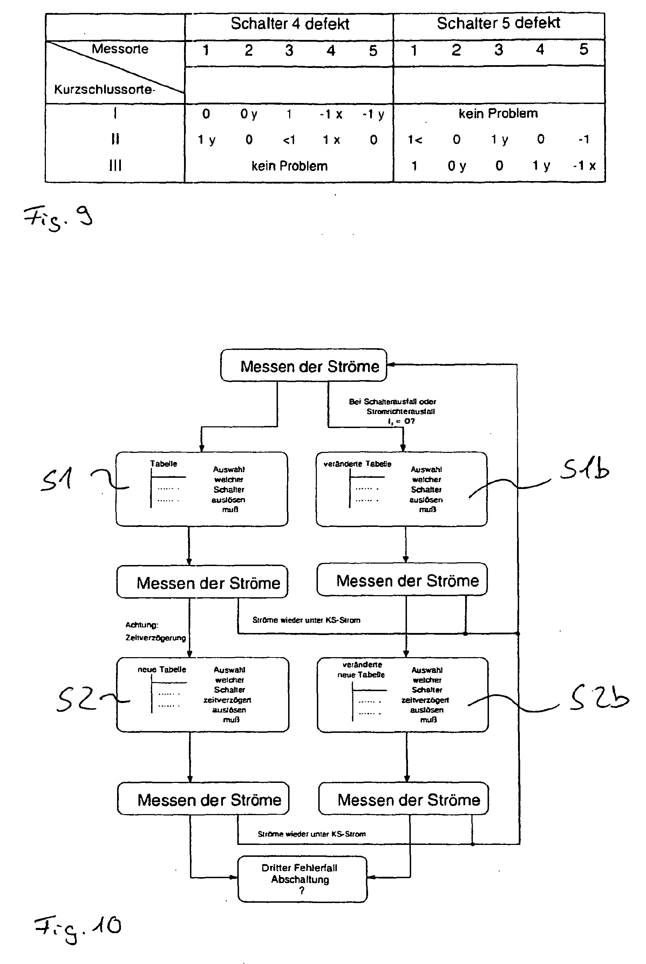

Fig. 9 zeigt die Kombination von Kurzschlussströmen für den Fall des Ausfalls eines Schalters nach dem Auslösen der anderen am Schaltvorgang beteiligten Schalter.

Fig. 10 zeigt schematisch einen geeigneten Programmablauf in der Steuereinrichtung. Begonnen wird mit dem kontinuierlichen Messen der Ströme an den Messstellen in den Leistungsschaltern, in Fig. 1 die Stellen 1 bis 5. Wird ein bestimmtes Bild von Kurzschlussströmen gemäß der Tabelle in Fig. 6 ermittelt, wird in einem ersten Schritt ermittelt, welcher Schalter geöffnet werden muss, um den Teil des Netzes mit dem Kurzschluss abzuschalten, wie es anhand von Fig. 6 erläutert wird. Dies erfolgt im Schritt S1 anschließend erfolgt ein erneutes Messen der Ströme, wird dabei weiterhin ein Kurzschluss festgestellt, wird eine neue Tabelle berücksichtigt, bei welcher der bereits geöffnete Schalter berücksichtigt ist. Anhand dieser neuen Tabelle wird dann wieder ermittelt, welcher Schalter geöffnet werden muss. Dies erfolgt im Schritt S2, wobei der entsprechende Schalter zeitverzögert geöffnet werden muss. Anschließend erfolgt ein erneutes Messen der Ströme. Ist weiterhin ein Fehlerfall gegeben, muss am Ende der Prozedur über eine Abschaltung des Systemes entschieden werden. Sollte beim Messen der Ströme festgestellt werden, dass die Ströme wieder unter dem Kurzschlussstrom liegen, beginnt der Programmablauf erneut von vorne. Sollte zu Beginn beim Messen der Ströme festgestellt werden, dass einer der Ströme 0 ist, d.h. das ein Stromrichter oder ein Schalter ausgefallen ist, wird auf eine entsprechend veränderte Tabelle im Schritt S1b zugegriffen, welche den defekten Schalter oder Stromrichter berücksichtig und die entsprechenden Bilder der Kurzschlussströme bzw. die entsprechende Verteilung der Kurzschlussströme enthält. Anhand dieser Tabelle wird überwacht, ob ein Kurzschluss auftritt und im Falle eines Kurzschlusses der Kurzschluss lokalisiert und der zu öffnenden Schalter ausgewählt. Danach erfolgt ein erneutes Messen der Ströme und für den Fall, dass der Kurzschluss weiter besteht, im Schritt S2b eine erneute Überwachung anhand einer veränderten neuen Tabelle entsprechend dem Schritt S2.

Auch wenn in der vorangehenden Beschreibung ein Ausführungsbeispiel anhand eines Netzes mit drei Wechselrichtern und insgesamt fünf Leistungsschaltern beschrieben wurde, ist zu verstehen, dass hier auch Netze mit mehr oder weniger als drei Wechselrichtern nach dem beschriebenen Verfahren bzw. in der beschriebenen Anordnung betrieben werden können. Auch können bei komplexeren Netzen mehr als fünf Schalter vorgesehen werden, wobei das Netzschutzkonzept entsprechend der vorangehenden Beschreibung mit entsprechend komplexeren Tabellen funktioniert.

### Bezugszeichenliste

| | | |
|---|---|---|
| 6 | - | Sammelschiene |
| 8 | - | Berechnungsmodul |
| 9 | - | Primärregler |
| 10 | - | Wirkleistungsregler |
| 12 | - | Blindleistungsregler |
| 14 | - | Ausgangsspannungsregler |
| 16, 18 | | Sekundärregler |
| WR1, WR2 WR3 | - | Wechselrichter |

## Patentansprüche

1. Unterseeboot mit einem elektrischen Bordnetz, welches zumindest zwei Wechselrichter (WR1, WR2, WR3) aufweist, welche eine gemeinsame Sammelschiene (6) speisen, wobei jeder der zumindest zwei Wechselrichter (WR1, WR2, WR3) mit einer unabhängigen Regeleinrichtung ausgestattet ist, welche zur Erfassung von aktuellen elektrischen Kenngrößen an der Sammelschiene (6) ausgebildet ist und ein Regelmodul aufweist, welches zur Regelung der Ausgangsspannung auf Grundlage der Kenngrößen und/oder abgeleiteter Kenngrößen ausgebildet ist, wobei das Regelmodul einen Primärregler (9) aufweist, in welchem für den Wechselrichter (WR1, WR2, WR3) statische Kennlinien hinterlegt sind, auf deren Grundlage die Führungsgrößen für den Primärregler ermittelt werden, und jede Regeleinrichtung mit zumindest einem Sekundärregler (16, 18) ausgestattet ist, welcher auf Grundlage der Kenngrößen oder der abgeleiteten Kenngrößen eine Parallelverschiebung einer im Primärregler (9) gespeicherten statischen Kennlinie zum Erreichen der Sollwerte, insbesondere von Frequenz und Spannung bei gegebener Leistung vornimmt, wobei der Sekundärregler mit einer Symmetrierungseinrichtung zur Symmetrierung der Lastverteilung ausgestattet ist.

2. Unterseeboot nach Anspruch 1, bei welcher jede Regeleinrichtung ein Erfassungsmodul zum Erfassen der elektrischen Kenngrößen, insbesondere der Netzspannungen und Netzströme an der Sammelschiene (6) aufweist.

3. Unterseeboot nach Anspruch 1 oder 2, bei welchem jede Regeleinrichtung ein Berechnungsmodul (8) zum Berechnen abgeleiteter Kenngrößen, insbesondere der Wirk- und Blindleistung sowie der Frequenz und Ausgangsklemmenspannung, auf Grundlage der erfassten elektrischen Kenngrößen aufweist.

4. Unterseeboot nach einem der vorangehenden Ansprüche, bei welchem die statischen Kennlinien ein Spannungs-Blindleistungsdiagramm und/oder ein Frequenz-Wirkleistungsdiagramm aufweisen, aus denen als Führungsgrößen abhängig von den erfassten Kenngrößen und/oder den abgeleiteten Kenngrößen die Blindleistung und/oder die Wirkleistung als Führungsgrößen ermittelt werden.

5. Unterseeboot nach Anspruch 4, bei welchem der Primärregler (9) einen Blindleistungsregler (12) und einen Wirkleistungsregler (10) aufweist.

6. Unterseeboot nach Anspruch 5, bei welchem das Regelmodul einen Ausgangsspannungsregler (14) aufweist, welchem die Regelgrößen des Blindleistungsreglers (12) und des Wirkleistungsreglers (10), insbesondere Frequenz und Spannung, als Führungsgrößen zugeführt werden.

7. Unterseeboot nach einem der vorhergehenden Ansprüche, bei welchem die Symmetrierungseinrichtung das Verhältnis der Ausgangsleistung des zugehörigen Wechselrichters (WR1, WR2, WR3) zu der Gesamtleistung an der Sammelschiene (6) erfasst und abhängig von einer Änderung dieses Verhältnisses eine Parallelverschiebung einer im Primärregler (9) gespeicherten statischen Kennlinie zum Erreichen der Sollwerte, insbesondere von Frequenz und Spannung bei gegebener Leistung vornimmt.

8. Unterseeboot nach einem der vorangehenden Ansprüche, bei welchem in der Regeleinrichtung zwei Sekundärregler (16, 18) vorgesehen sind, von welchen der eine zur Frequenz- und der andere zur Spannungsreglung dient.

9. Unterseeboot nach einem der vorangehenden Ansprüche mit einem elektrischen Bordnetz, welches in mehrere Teilnetze (A, B, C, I, II, III) aufgeteilt ist, welche jeweils durch zumindest einen Leistungsschalter (1, 2, 3, 4, 5) abgesichert sind, wobei
die einzelnen Teilnetze (A, B, C, I, II, III) mit Sensoren (1, 2, 3, 4, 5) zum Erfassen von Kenndaten der einzelnen Teilnetze (A, B, C, I, II, III) ausgestattet sind,
die Sensoren und die Leistungsschalter (1, 2, 3, 4, 5)mit einer gemeinsamen Steuereinrichtung kommunizieren, und
die Leistungsschalter (1, 2, 3, 4, 5) von der Steuereinrichtung in Abhängigkeit der aktuell erfassten Kenndaten selektiv schaltbar sind.

10. Unterseeboot nach Anspruch 9, bei welchem die Kenndaten der einzelnen Teilnetze (A, B, C, I, II, III) die elektrischen Ströme in den einzelnen Teilnetzen umfassen.

11. Unterseeboot nach Anspruch 9 oder 10, bei welchem in der Steuereinrichtung zumindest eine Tabelle hinterlegt ist, in welcher jeweils für den Kurzschlussfall in einem der Teilnetze (A, B, C, I, II, III) die jeweils in den einzelnen Teilnetzen (A, B, C, I, II, III) und/oder an den zugehörigen Sensoren (1,2, 3, 4, 5) auftretenden Kurzschlussströme oder deren Verhältnis zueinander hinterlegt ist.

12. Unterseeboot nach Anspruch 11, bei welchem die Steuereinrichtung derart ausgebildet ist, dass die Lokalisierung des Kurzschlussfalles durch Zuordnung der auftretenden Kombination von Kurzschlussströmen anhand der abgelegten Tabelle erfolgt und von der Steuereinrichtung daraufhin der entsprechende Leistungsschalter (1, 2, 3, 4, 5) zum Abtrennen des Teilnetzes (A, B, C, I, II, III), in dem der Kurzschlussfall lokalisiert wurde, schaltbar ist.

13. Unterseeboot nach Anspruch 11 oder 12, bei welchem in der Steuereinrichtung eine oder mehrere Tabelle(n) hinterlegt ist/sind, in welcher jeweils für den Kurzschlussfall in einem der Teilnetze (A, B, C, I, II, III) die jeweils in den einzelnen Teilnetzen (A, B, C, I, II, III) und/oder an den zugehörigen Sensoren auftretenden Kurzschlussströme oder deren Verhältnis zueinander hinterlegt ist, für den Fall, dass ein oder mehrere bestimmte Leistungsschalter (1, 2, 3, 4, 5) geöffnet sind.

14. Unterseeboot nach Anspruch 13, bei welchem die Steuereinrichtung derart ausgebildet ist, dass nach dem Schalten eines Leistungsschalters (1, 2, 3, 4, 5) zum Trennen eines Teilnetzes (A, B, C, I, II, III) für nachfolgende Lokalisierungen von Kuruchlussfällen eine zugehörige Tabelle verwendet wird, welche den geöffneten Zustand des Leistungsschalters berücksichtigt.

15. Unterseeboot nach einem der Ansprüche 9 bis 12, bei welchem die Sensoren in die Leistungsschalter (1, 2, 3, 4, 5) integriert sind.

## Claims

1. Submarine with an electrical onboard network, which has at least two inverters (WR1, WR2, WR3), which supply a common busbar (6), wherein each of the at least two inverters (WR1, WR2, WR3) is equipped with an independent control unit, which is configured to detect current electrical characteristics at the busbar (6) and comprises a control module, which is configured to regulate the output voltage on the basis of the characteristics and/or derived characteristics, wherein the control module has a primary controller (9), in which static characteristic curves for the inverters (WR1, WR2, WR3) are entered, on the basis of which the reference values for the primary controller are determined and each control unit is equipped with at least one secondary controller (16, 18), which carries out a parallel displacement of a static characteristic curve saved in the primary controller (9) based on the characteristics or the derived characteristics for achieving the set values, in particular of frequency and voltage with a given power output, wherein the secondary controller is equipped with a balancing device for balancing the load distribution.

2. Submarine according to claim 1, in which each control unit has a detection module for detecting the electrical characteristics, in particular the network voltages and network currents at the busbar (6).

3. Submarine according to claim 1 or 2, in which each control unit has a calculation module (8) for calculating derived characteristics, in particular the effective power and reactive power as well as the frequency and output terminal voltage, on the basis of the detected electrical characteristics.

4. Submarine according to one of the preceding claims, in which the static characteristic curves comprise a voltage reactive power diagram and/or a frequency-effective power diagram, from which as reference values, depending on the detected characteristics and/or the derived characteristics, the reactive power and/or the effective power are determined as reference values.

5. Submarine according to claim 4, in which the primary controller (9) comprises a reactive power controller (12) and an effective power controller (10).

6. Submarine according to claim 5, in which the control module comprises an output voltage controller (14), to which the control variables of the reactive power controller (12) and of the effective power controller (10), in particular frequency and voltage, are supplied as reference values.

7. Submarine according to one of the preceding claims, in which the balancing device detects the ratio of the output power of the associated inverter (WR1, WR2, WR3) to the total power at the busbar (6) and depending on a change of this ratio, carries out a parallel displacement of a static characteristic curve saved in the primary controller (9) for achieving the set values, in particular of frequency and voltage with a given power output.

8. Submarine according to one of the preceding claims, in which in the control unit, two secondary controllers (16, 18) are provided, one of which serves for frequency control and the other of which serves for voltage control.

9. Submarine according to one of the preceding claims with an electrical onboard network, which is subdivided into multiple partial networks (A, B, C, I, II, III), which are respectively protected by means of at least one circuit breaker (1, 2, 3, 4, 5), wherein the individual partial networks (A, B, C, I, II, III) are equipped with sensors (1, 2, 3, 4, 5,) for detecting characteristic data for the individual partial networks (A, B, C, I, II, III), the sensors and the circuit breakers (1, 2, 3, 4, 5) communicate with a common control device, and the circuit breakers (1, 2, 3, 4, 5) are selectively switchable by the control device depending on the effective detected characteristic data.

10. Submarine according to claim 9, in which the characteristic data of the individual partial networks (A, B, C, I, II, III) include the electrical currents in the individual partial networks.

11. Submarine according to claim 9 or 10, in which in the control unit, at least one table is entered, into which the short circuit currents or their ratio to one another occurring in the individual partial networks (A, B, C, I, II, III) and/or at the associated sensors (1, 2, 3, 4, 5) respectively are entered for a short circuit event in one of the partial networks (A, B, C, I, II, III).

12. Submarine according to claim 11, in which the control device is configured in such a manner that the localization of the short circuit event takes place by assigning the occurring combination of short circuit currents by reference to the entered table and thereupon the corresponding circuit breaker (1, 2, 3, 4, 5) is switchable by the control device for cutting off the partial network (A, B, C, I, II, III), in which the short circuit event was localized.

13. Submarine according to claim 11 or 12, in which in the control device, one or more table(s) are entered in which respectively, for the short circuit event in one of the partial networks (A, B, C, I, II, III) the short circuit currents or their ratio to one another occurring in the individual partial networks (A, B, C, I, II, III) and/or at the associated sensors are entered, for the case that one or more determined circuit breakers (1, 2, 3, 4, 5) are opened.

14. Submarine according to claim 13, in which the control device is configured in such a manner that after switching of a circuit breaker (1, 2, 3, 4, 5) for cutting off a partial network (A, B, C, I, II, III) for subsequent localization of short circuit events, an associated table is used, which takes into consideration the opened state of the circuit breaker.

15. Submarine according to one of claims 9 to 12, in which the sensors are integrated into the circuit breakers (1, 2, 3, 4, 5).

## Revendications

1. Sous-marin équipé d'un réseau électrique de bord, présentant au moins deux onduleurs (WR1, WR2, WR3) qui alimentent une barre omnibus commune (6), dans lequel chacun des au moins deux onduleurs (WR1, WR2, WR3) est équipé d'un dispositif de régulation indépendant qui est conçu pour la détection de grandeurs caractéristiques électriques en cours sur la barre omnibus (6) et comporte un module de régulation conçu pour réguler la tension de sortie sur la base des grandeurs caractéristiques et/ou de grandeurs caractéristiques dérivées, le module de régulation comprenant un régulateur primaire (9) dans lequel sont mémorisées, pour l'onduleur (WR1, WR2, WR3), des caractéristiques statiques sur la base desquelles sont déterminées les grandeurs pilotes pour le régulateur primaire, et chaque dispositif de régulation étant équipé d'au moins un régulateur secondaire (16, 18) qui, sur la base des grandeurs caractéristiques ou des grandeurs caractéristiques dérivées, opère un déplacement parallèle d'une caractéristique statique stockée dans le régulateur primaire (9) pour atteindre les valeurs de consigne, en particulier de fréquence et de tension pour une puissance donnée, le régulateur secondaire étant doté d'un dispositif d'équilibrage pour l'équilibrage de la répartition de charge.

2. Sous-marin selon la revendication 1, dans lequel chaque dispositif de régulation comprend un module de détection destiné à détecter les grandeurs caractéristiques électriques, en particulier des tensions secteur et courants secteur sur la barre omnibus (6).

3. Sous-marin selon la revendication 1 ou 2, dans lequel chaque dispositif de régulation comprend un module de calcul (8) destiné à calculer des grandeurs caractéristiques dérivées, en particulier de la puissance active et réactive, ainsi que de la fréquence et de la tension aux bornes de sortie, sur la base des grandeurs caractéristiques électriques détectées.

4. Sous-marin selon l'une des revendications précédentes, dans lequel les caractéristiques statiques présentent un diagramme tension-puissance réactive et/ou un diagramme fréquence-puissance active à partir desquels on peut déterminer, en tant que grandeurs pilotes, la puissance réactive et/ou la puissance active en fonction des grandeurs caractéristiques détectées et/ou des grandeurs caractéristiques dérivées.

5. Sous-marin selon la revendication 4, dans lequel le régulateur primaire (9) comprend un régulateur de puissance réactive (12) et un régulateur de puissance active (10).

6. Sous-marin selon la revendication 5, dans lequel le module de régulation comprend un régulateur de tension de sortie (14) auquel sont transmises, en tant que grandeurs pilotes, les grandeurs de réglage du régulateur de puissance réactive (12) et du régulateur de puissance active (10), en particulier fréquence et tension.

7. Sous-marin selon l'une des revendications précédentes, dans lequel le dispositif d'équilibrage détecte le rapport entre la puissance de sortie de l'onduleur (WR1, WR2, WR3) correspondant et la puissance totale sur la barre omnibus (6) et, en fonction d'une variation de ce rapport, opère un déplacement parallèle d'une caractéristique statique stockée dans le régulateur primaire (9) pour atteindre les valeurs de consigne, en particulier de fréquence et de tension, pour une puissance donnée.

8. Sous-marin selon l'une des revendications précédentes, dans lequel sont prévus dans le dispositif de régulation deux régulateurs secondaires (16, 18) dont l'un sert à la régulation de fréquence et l'autre à la régulation de tension.

9. Sous-marin selon l'une des revendications précédentes, comprenant un réseau électrique de bord subdivisé en plusieurs sous-réseaux (A, B, C, I, II, III) qui sont protégés respectivement par au moins un sectionneur de puissance (1, 2, 3, 4, 5), dans lequel les différents sous-réseaux (A, B, C, I, II, III) sont pourvus de capteurs (1, 2, 3, 4, 5) pour détecter des données caractéristiques des différents sous-réseaux (A, B, C, I, II, III), les capteurs et les sectionneurs de puissance (1, 2, 3, 4, 5) communiquent avec un dispositif de commande commun, et les sectionneurs de puissance (1, 2, 3, 4, 5) peuvent être sélectivement commutés par le dispositif de commande en fonction des données caractéristiques réelles détectées.

10. Sous-marin selon la revendication 9, dans lequel les données caractéristiques des différents sous-réseaux (A, B, C, I, II, III) comprennent les courants électriques dans les différents sous-réseaux.

11. Sous-marin selon la revendication 9 ou 10, dans lequel est mémorisé, dans le dispositif de commande, au moins un tableau dans lequel, pour chaque cas de court-circuit survenant dans l'un des sous-réseaux (A, B, C, I, II, III), sont mémorisés les courants de court-circuit survenant respectivement dans les différents sous-réseaux (A, B, C, I, II, III) et/ou sur les capteurs (1, 2, 3, 4, 5) associés, ou leur rapport mutuel..

12. Sous-marin selon la revendication 11, dans lequel le dispositif de commande est conçu de façon telle que la localisation du cas de court-circuit s'opère par affectation de la combinaison occurrente de courants de court-circuit à l'aide du tableau mémorisé et que le sectionneur de puissance (1, 2, 3, 4, 5) correspondant est commutable ensuite par le dispositif de commande pour isoler le sous-réseau (A, B, C, I, II, III) dans lequel le cas de court-circuit a été localisé.

13. Sous-marin selon la revendication 11 ou 12, dans lequel est ou sont mémorisé(s) dans le dispositif de commande un ou plusieurs tableau(x) dans lesquels sont consignés, pour chaque cas de court-circuit dans l'un des sous-réseaux (A, B, C, I, II, III), les courants de court-circuit survenant respectivement dans les différents sous-réseaux (A, B, C, I, II, III) et/ou sur les capteurs associés, ou leur rapport mutuel, dans le cas où un ou plusieurs sectionneurs de puissance (1, 2, 3, 4, 5) sont ouverts.

14. Sous-marin selon la revendication 13, dans lequel le dispositif de commande est conçu de façon telle qu'après commutation d'un sectionneur de puissance (1, 2, 3, 4, 5) pour isoler un sous-réseau (A, B, C, I, II, III), on utilise pour les localisations de cas de court-circuit ultérieures, un tableau correspondant qui prend en compte l'état ouvert du sectionneur de puissance.

15. Sous-marin selon l'une des revendications 9 à 12, dans lequel les capteurs sont intégrés dans les sectionneurs de puissance (1, 2, 3, 4,5).
